**Europäisches Patentamt**

**European Patent Office**

**Office européen des brevets**

(11) Veröffentlichungsnummer: **0 262 548 B1**

(12) # EUROPÄISCHE PATENTSCHRIFT

(45) Veröffentlichungstag der Patentschrift: **22.05.91**

(51) Int. Cl.⁵: **G09G 1/00**

(21) Anmeldenummer: **87113786.5**

(22) Anmeldetag: **21.09.87**

(54) **Verfahren und Anordnung zum Darstellen von mit zugehörigen Steuerzeichen vorgesehenen Texten an einer Anzeigeeinheit.**

(30) Priorität: **23.09.86 DE 3632250**

(43) Veröffentlichungstag der Anmeldung:
**06.04.88 Patentblatt 88/14**

(45) Bekanntmachung des Hinweises auf die
Patenterteilung:
**22.05.91 Patentblatt 91/21**

(84) Benannte Vertragsstaaten:
**CH DE FR GB IT LI SE**

(56) Entgegenhaltungen:

**H. BOEKE: "Werken met Wordperfect", Mai 1986, Seiten 78-80, G.W. Boeken BV, Amsterdam, NL;**

(73) Patentinhaber: **Siemens Aktiengesellschaft
Wittelsbacherplatz 2
W-8000 München 2(DE)**

(72) Erfinder: **Günther, Gerd-Joachim, Dipl.-Ing.
(FH)
Jasperallee 37
W-8000 München 60(DE)**

## Beschreibung

Verfahren und Anordnung zum Darstellen von mit zugehörigen Steuerzeichen vorgesehenen Texten an einer Anzeigeeinheit

Die Erfindung bezieht sich auf ein Verfahren zum Darstellen von mit zugehörigen Steuerzeichen versehenen Texten an einer Anzeigeeinheit gemäß dem Oberbegriff des Patentanspruchs 1. Weiterhin bezieht sich die Erfindung auf eine Anordnung zur Durchführung des Verfahrens.

Zum Darstellen von Texten mit zugehörigen Steuerzeichen an einer Anzeigeeinheit ist es aus der DE-A-31 04 675 bereits bekannt, an einem Bildschirm eines Datenendgeräts während eines normalen Betriebszustands alphanumerische Texte und/oder grafische Muster darzustellen und während eines Testzustands die normalerweise nicht darstellbaren Steuerzeichen durch Symbole darzustellen.

Eine derartige bekannte Darstellung der Steuerzeichen erweist sich immer dann als vorteilhaft, wenn für jedes Zeichen, unabhängig davon, ob es ein alphanumerisches Zeichen, ein grafisches Zeichen oder ein Steuerzeichen ist, ein eigener Zeichenplatz an der Anzeige vorgesehen ist. Falls eine derartige Darstellung jedoch nicht erwünscht ist und nur für die darstellbaren Zeichen und die Zwischenräume Zeichenplätze vorgesehen sind, wie dies bei Textstationen, beispielsweise Fernschreibmaschinen üblich ist, ist eine derartige Darstellung der Steuerzeichen an der Anzeigeeinheit nicht möglich. Außerdem würden die Darstellungen des eigentlichen Textes im normalen Betriebszustand und des mit den Steuerzeichen versehenen Textes im Testzustand nicht übereinstimmen, da das Schriftbild vollständig verändert werden kann und ein Bediener kann sich an der Anzeigeeinheit nur sehr schwer orientieren.

Aus der DE-A- 32 44 115 ist ein Verfahren zum Darstellen von Texten und zugehörigen Steuerzeichen bekannt, bei dem das Schriftbild nicht verändert wird. Bei diesem bekannten Verfahren wird eine Schreibmarke, die eine jeweilige Schreib-stelle an der Anzeigeeinheit kennzeichnet, in ihrer Form verändert, in Abhängigkeit davon, ob ein Steuerzeichen und welches Steuerzeichen vor der durch die Schreibmarke gekennzeichneten Zeichenpositionen angeordnet ist.

Dieses bekannte Verfahren gibt eine sehr einfache Möglichkeit an, die verschiedenen Steuerzeichen darzustellen. Falls jedoch mehrere Steuerzeichen aufeinanderfolgend vorgesehen sind, erfordert dieses Verfahren von der Bedienperson eine große Aufmerksamkeit. Diese Aufmerksamkeit ist insbesondere dann erforderlich, wenn Kombinationen von Steuerzeichen bestimmte weitere Bedeutungen zugeordnet werden.

Weiterhin ist bekannt, das Schriftbild in zwei Teile aufzuteilen, wobei ein Teil den Text in seiner ursprünglichen Form und der andere Teil den Text mit Steuerzeichen aufzeigt (H. Boeke "Werken met WordPerfect", Mai 86, Seiten 78-80, G.W. Boeken BV Amsterdam NL).

Der Erfindung liegt daher die Aufgabe zugrunde, ein Verfahren und eine Anordnung zum Darstellen von Texten mit zugehörigen Steuerzeichen anzugeben, bei dem zur leichten Erkennung von einander entsprechenden Stellen auf den Schriftbildteilen entsprechende Hinweise möglich sind und wobei z.B. auch zur Überprüfung andersartiger Schriften die Aufzeichnungsstellen auf beiden Schriftbildteilen voneinander unabhängig sind.

Erfindungsgemäß wird die Aufgabe bei dem Verfahren der eingangs genannten Art durch die im kennzeichnenden Teil des Patentanspruchs 1 angegebenen Merkmale gelöst.

Das Verfahren gemäß der Erfindung hat den Vorteil, daß sich eine Bedienperson sehr einfach innerhalb eines Textes orientieren kann, so daß ein Redigieren des Textes und insbesondere ein Ändern der Steuerzeichen und der darstellbaren Zeichen auf einfache Weise ermöglicht wird. Das Verfahren gemäß der Erfindung eignet sich insbesondere dann, wenn auch den Kombinationen der einzelnen Steuerzeichen weitere Bedeutungen zugeordnet werden, die von der Summe der Bedeutungen der einzelnen Steuerzeichen abweichen. Beispielsweise werden bei einer Fernschreibübertragung Folgen von Steuerzeichen Bu, Zi und K32 für eine Umschaltung zwischen der Darstellung in einer lateinischen Schrift und einer arabischen Schrift verwendet.

Die Orientierung an der Anzeigeeinheit erfolgt beim Redigieren durch eine Schreibmarke, die an jeweils einer Stelle des mit den zugehörigen Steuerzeichen versehenen Texte s dargestellt wird. Gleichzeitig kann die Schreibmarke an einer entsprechenden Stelle des eigentlichen Textes dargestellt werden.

Um zu erreichen, daß die zu bearbeitenden Bereiche eines Textes möglich in der Mitte der beiden Teile der Bildfläche der Anzeigeeinheit dargestellt werden, ist es zweckmäßig, die Texte an der Anzeigeeinheit gegebenenfalls unabhängig voneinander zu verschieben oder zu rollen. Das Redigieren des mit den Steuerzeichen versehenen Textes ist nur zeichenweise vorgesehen. Jede Änderung des Textes ergibt einen neuen Bildaufbau, so daß eine mögliche Zerstörung des eigentlichen Textes sofort in dem einen Teil an der Anzeigeeinheit erkannt werden kann. Zweckmäßigerweise bleibt die Tastatur jeweils bis zum neuen Bildaufbau gesperrt, um eine fehlerhafte Eingabe zu verhindern.

Die zusätzliche Darstellung des mit den Steuerzeichen versehenen Textes in einem Teil der Bildfläche

2

an der Anzeigeeinheit kann entweder mittels einer besonderen Taste an der Tastatur der Textstation oder nach Darstellung eines Menüs an der Anzeigeeinheit erfolgen.

Falls Texte in einer Schriftart, wie beispielsweise einer arabischen Schrift eingegeben werden, bei denen sich die Form der Zeichen in Abhängigkeit von der Position im Wort verändern, wird bei der Darstellung der mit den Steuerzeichen versehenen Texte zweckmäßigerweise das jeweilige Schriftzeichen nur in seiner Grundform dargestellt.

Eine Anordnung zur Durchführung des Verfahrens enthält eine Steuereinheit, die die Darstellung an der Bildfläche der Anzeigeeinheit derart steuert, daß in dem einen Teil, zweckmäßigerweise dem oberen Teil der Bildfläche der eigentliche Text und in dem anderen Teil, zweckmäßigerweise im unteren Teil der mit den Steuerzeichen versehene Text dargestellt wird. Die Steuereinheit führt die Darstellung der Texte an der Bildfläche bei einer vorteilhaften Ausführungsform programmgesteuert durch und enthält zu diesem Zweck mindestens einen Mikrocomputer.

Das Verfahren gemäß der vorliegenden Erfindung wird im folgenden in Verbindung mit einer Anordnung zur Durchführung des Verfahrens näher erläutert. Es zeigen

FIG 1 ein Blockschaltbild einer mit einer Anordnung zur Durchführung des Verfahrens versehenen Textstation und

FIG 2 bis 4 Darstellungen von Texten und mit zugehörigen Steuerzeichen versehenen Texten an einer Bildfläche einer Anzeigeeinheit.

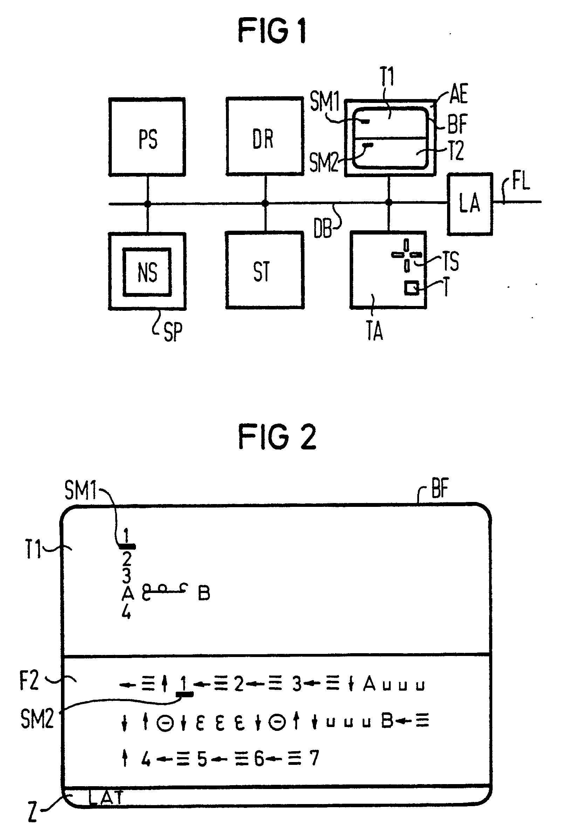

Die in FIG 1 dargestellte Textstation, die beispielsweise als eine Fernschreibmaschine für einen zweisprachigen Betrieb in lateinischer und arabischer Schrift ausgebildet ist, enthält eine Steuereinheit ST, an der über einen Datenbus DB mehrere Einheiten angeschlossen sind. Diese Einheiten sind eine Leitungsanpassung LA, über die die Textstation an einer Fernleitung FL angeschlossen ist, eine Tastatur TA, eine mit einem Nachrichtenspeicher NS versehene Speichereinheit SP, eine periphere Speichereinheit PS, wie beispielsweise eine Lochstreifeneinheit oder eine Floppydiskeinheit, ein Drucker DR und eine Anzeigeeinheit AE. Die mittels der Tastatur TA oder dem peripheren Speicher PS eingegebenen Texte, die im Nachrichtenspeicher NS gespeicherten Texte oder die über die Fernleitung FL empfangenen Texte werden an einer Bildfläche BF der Anzeigeeinheit AE in bekannter Weise dargestellt.

Falls ein Text redigiert werden soll und insbesondere Steuerzeichen verändert werden sollen, wird, gegebenenfalls nach dem Aufrufen eines entsprechenden Menüs, eine Taste T an der Tastatur TA betätigt und die Steuereinheit ST bewirkt eine Einteilung der Bildfläche BF in zwei Teilflächen T1 und T2, wobei in der oberen Teilfläche T1 der Text nach wie vor in seiner eigentlichen Form, d. h. mit demselben Schriftbild dargestellt wird und wobei in der unteren Teilfläche T2 der Text mit seinen zugehörigen Steuerzeichen dargestellt wird. Die Steuerzeichen werden dabei zweckmäßigerweise durch Symbole dargestellt und da die Symbole einen Zeichenplatz benötigen, verändert sich das Schriftbild des Textes in der Teilfläche T2. Da der Text an der Bildfläche BF nun zweifach dargestellt wird, kann je nach Umfang des Textes dieser nur teilweise in den Teilflächen T1 und T2 dargestellt werden.

Die jeweils zu redigierende Stelle des Textes wird durch Schreibmarken SM1 und SM2 gekennzeichnet, die jeweils einander entsprechende Stellen der Texte markieren. Die Steuerung der Schreibmarken SM1 und SM2 erfolgt durch Tasten TS an der Tastatur TA. Außer den Tasten T und TS enthält die Tastatur TA in bekannter Weise alphanumerische Tasten und gegebenenfalls eine Taste zum Umschalten des Abdrucks in unterschiedlichen Schriften.

Bei der Darstellung in FIG 2 wird davon ausgegangen, daß in dem Nachrichtenspeicher NS oder dem peripheren Speicher PS ein Text gespeichert ist, der untereinander die Ziffern 1 bis 7 enthält und bei dem zwischen den Ziffern 3 und 4 ein Text eingeschoben ist, der aus dem lateinischen Buchstaben A, aus drei arabischen Zeichen und dem lateinischen Buchstaben B besteht. Im Normalbetrieb wird dieser Text vollständig an der Bildfläche BF der Anzeigeeinheit AE dargestellt. Da jedoch im Redigierzustand die Bildfläche BF in die beiden Teilflächen T1 und T2 aufgeteilt wird, kann nur ein Teil dieses Textes dargestellt werden. In der Teilfläche T2 ist derselbe Text, jedoch versehen mit Steuerzeichen dargestellt, wobei die

Steuerzeichen die in der nachfolgenden Tabelle angegebenen Bedeutungen haben.

Tabelle

| Buchstabenumschaltung | BU | ↓ |
|---|---|---|
| Ziffernumschaltung | ZI | ↑ |
| Kombination 32 | K32 | ⊖ |
| Wagenrücklauf | WR | ← |
| Zeilenvorschub | ZL | ≡ |
| Zwischenraum | ZWR | ⊔ |
| Arabisch | ARA | ↓ ↑ ⊖ ↓ |
| Lateinisch | LAT | ↓ ⊖ ↑ ↓ |

Vor jeder Ziffer und vor dem Buchstaben A wurden jeweils die Steuerzeichen Wagenrücklauf und Zeilenvorschub eingegeben. Außerdem wurde vor der Ziffer 1 ein Ziffernumschaltzeichen eingegeben und vor dem Buchstaben A ein BuchstabenumschaltZeichen eingegeben. Da die arabischen Zeichen von rechts nach links abgedruckt werden, wurden nach dem Buchstaben A drei Zeichen Zwischenraum eingegeben und die Umschaltung auf die arabische Schrift erfolgte durch die Folge der Steuerzeichen Buchstabenumschaltung, Ziffernumschaltung, Kombination 32 und Buchstabenumschaltung. Anschließend wurden die drei arabischen Zeichen eingegeben, die in der Teilfläche T2 in ihrer Grundform dargestellt sind, während sie in der Teilfläche TI in ihrer richtigen Form, die jeweils von der Position im Wort abhängt, dargestellt sind. Nach den arabischen Zeichen erfolgt eine Umschaltung auf lateinische ?Schrift durch eine Kombination der Umschaltzeichen Buchstabenumschaltung, Komtiination 32, Ziffernumschaltung und Buchstabenumschaltung. Um nach den arabischen Zeichen wieder lateinische Zeichen von links nach rechts schreiben zu können, wurden drei Zeichen Zwischenraum eingegeben. Nach dem Zeichen B wurde nach den Umschaltzeichen Wagenrücklauf und Zeile wieder eine Ziffernumschaltung vorgenommen, um die Ziffern 4 bis 7 darstellen zu können.

In einer weiteren Teilfläche Z der Bildfläche BF erfolgt durch Buchstaben LAT oder ARA eine Darstellung, ob sich die Textstation gerade in dem Zustand für die Darstellung der lateinischen Schrift oder der arabischen Schrift befindet.

Die Schreibmarken SM1 und SM2 befinden sich jeweils unter der Ziffer 1 und an verschiedenen Stellen der Teilflächen T1 und T2, da sich durch die Darstellung der Steuerzeichen in der Teilfläche T2 das Schriftbild des Textes stark verändert hat.

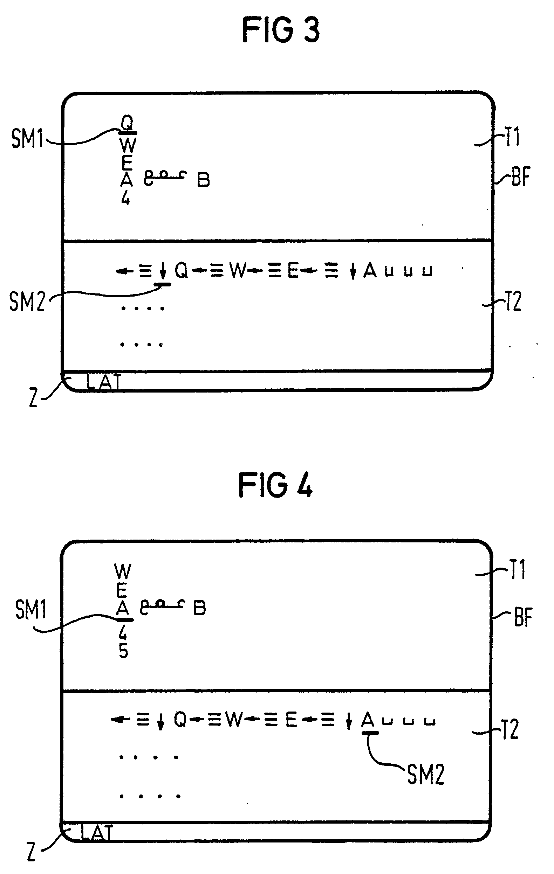

In FIG 3 wird angenommen, daß das Steuerzeichen Ziffernumschaltung vor der Ziffer 1 in ein Steuerzeichen Buchstabenumschaltung verändert werden soll und zu diesem Zweck befindet sich die Schreibmarke SM2 an der entsprechenden Stelle. Nach der Änderung des Steuerzeichens Ziffernumschaltung in das Steuerzeichen Buchstabenumschaltung verändern sich sowohl in der Teilfläche T1 als auch in der Teilfläche T2 die Ziffern 1 bis 3 in die Buchstaben Q, W und E. Der übrige, durch Punkte angedeutete Text mit den zugehörigen Steuerzeichen in der Teilfläche T2 entspricht dem in FIG 2 dargestellten Text mit den Steuerzeichen.

Wenn in den Teilflächen T1 und T2 die Schreibmarke SM1 bzw. SM2 nach unten bewegt wird, wer den die zugehörigen Texte nach oben verschoben oder gerollt, so daß die zu bearbeitenden Bereiche möglichst immer in der Mitte der Teilflächen T1 und T2 sichtbar sind.

In FIG 4 ist der Fall dargestellt, daß die Schreibmarke SM1 zum Buchstaben A bewegt wird und als Folge davon wurde der Text in der Teilfläche T1 um eine Zeile nach oben verschoben, so daß der Buchstabe Q nicht mehr sichtbar ist aber stattdessen die Ziffer 5 sichtbar wird. Eine Änderung der Darstellung in der Teilfläche T2 wird in diesem Fall nicht durchgeführt.

Das Redigieren des mit den Steuerzeichen versehenen Textes ist nur zeichenweise erlaubt. Jede Änderung bewirkt einen neuen Bildaufbau, so daß eine mögliche Zerstörung des eigentlichen Textes in der Teilfläche T1 sofort erkannt wird. Die Tastatur TA bleibt jeweils bis zum neuen Bildaufbau gesperrt, um eine unbeabsichtigte Tasteneingabe gleich wieder rückgängig machen zu können.

## EP 0 262 548 B1

### Ansprüche

1. Verfahren zum Darstellen von Texten und zugehörigen Steuerzeichen an einer Anzeigeeinheit einer Textstation, wobei die Bildfläche (BF) der Anzeigeeinheit (AE) in eine erste Teilfläche (T1) und eine zweite Teilfläche (T2) eingeteilt wird, wobei an der ersten Teilfläche (T1) der eigentliche Text in seiner ursprünglichen Form dargestellt wird und wobei in der zweiten Teilfläche (T2) der mit den zugehörigen Steuerzeichen versehene Text dargestellt wird. wobei weiterhin an der zweiten Teilfläche (T2) eine Schreibmarke (SM2) an jeweils einer Stelle des mit den zugehörigen Steuerzeichen versehenen Textes dargestellt wird. **dadurch gekennzeichnet,** daß gleichzeitig mit der an der zweiten Teilfläche (T2) dargestellten Schreibmarke (SM2) an der ersten Teilfläche (T1) eine Schreibmarke (SM1) an einer entsprechenden Stelle des eigentlichen Textes dargestellt wird und daß der eigentliche Text und der mit den Steuerzeichen versehene Text in den beiden Teilflächen (T1, T2) unabhängig voneinander verschiebbar sind.

2. Verfahren nach Anspruch 1, **dadurch gekennzeichnet,** daß der eigentliche Text und der mit den Steuerzeichen versehene Text derart verschoben werden, daß die jeweils durch die Schreibmarken (SM1, SM2) gekennzeichneten Stellen sichtbar sind.

3. Verfahren nach Anspruch 1 und 2, **dadurch gekennzeichnet,** daß die Tastatur (TA) während jedes neuen Bildaufbaus gesperrt ist.

4. Verfahren nach einem der Ansprüche 1 bis 3, **dadurch gekennzeichnet,** daß in einer weiteren Teilfläche (Z) der Bildfläche (BF) eine Zustandsanzeige erfolgt.

5. Verfahren nach einem der Ansprüche 1 bis 4, bei der an der Textstation Texte in einer arabischen Schrift darstellbar sind, **dadurch gekennzeichnet,** daß die Zeichen der arabischen Schrift bei den an der ersten Teilfläche (T1) dargestellten Texten in ihrer korrekten Form und bei den mit den zugehörigen Steuerzeichen versehenen Texten in der zweiten Teilfläche (T2) in ihrer Grundform dargestellt werden.

### Claims

1. Method of displaying texts and accompanying control characters on a display unit of a text station, the scanned field (BF) of the display unit (AE) being divided into a first sub-field (T1) and a second sub-field (T2), the actual text being displayed in its original form in the first sub-field (T1) and the text provided with the accompanying control characters being displayed in the second sub-field (T2), furthermore a cursor (SM2) being displayed in the second sub-field (T2) in each case at a point of the text provided with the accompanying control characters, characterised in that simultaneously with the cursor (SM2) displayed in the second sub-field (T2) a cursor (SM1) is displayed in the first sub-field (T1) at a corresponding point of the actual text, and in that the actual text and the text provided with the control characters can be displaced independently of one another in the two sub-fields (T1, T2).

2. Method according to Claim 1, characterised in that the actual text and the text provided with the control characters are displaced in such a way that the points characterised in each case by the cursors (SM1, SM2) are visible.

3. Method according to Claim 1 and 2, characterised in that the keyboard (TA) is locked during each new image build-up.

4. Method according to one of Claims 1 to 3, characterised in that a status display takes place in a further sub-field (Z) of the scanned field (BF).

5. Method according to one of Claims 1 to 4, in which texts can be displayed in an Arabic script at the text station, characterised in that the characters of the Arabic script in the texts displayed in the first subfield (T1) are displayed in their correct form, and are displayed in their elementary input form in the texts provided with the accompanying control characters in the second sub-field (T2).

5

**Revendications**

1. Procédé pour représenter sur une unité d'affichage des textes et des caractères de commande associés d'un poste de transmission de textes, et selon lequel la surface d'image (BF) de l'unité d'affichage (AE) est subdivisée en une première surface partielle (T1) et en une seconde surface partielle (T2), le texte proprement dit est représenté sous sa forme initiale dans la première surface partielle (T1) et le texte pourvu des caractères de commande associés est représenté dans la seconde surface partielle (T2), et en outre un curseur (SM2) est déplacé, dans la seconde surface partielle (T2), en un emplacement du texte pourvu des caractères de commande associés, caractérisé par le fait qu'un curseur (SM1) est déplacé dans la première surface partielle (T1) en un emplacement correspondant du texte proprement dit, en même temps que le curseur (SM2) est déplacé dans la seconde surface partielle (T2), et que le texte proprement dit et le texte pourvu des caractères de commande peut être déplacé dans les deux surfaces partielles (T1,T2), et ce indépendamment l'une de l'autre.

2. Procédé suivant la revendication 1, caractérisé par le fait que le texte proprement dit et le texte pourvu des caractères de commande sont déplacés de telle sorte que les emplacements caractérisés respectivement par les curseurs (SM1,SM2) sont visibles.

3. Procédé suivant les revendications 1 et 2, caractérisé par le fait que le clavier (TA) est bloqué pendant la formation d'une nouvelle image.

4. Procédé suivant l'une des revendications 1 à 3, caractérisé par le fait qu'un affichage d'état est réalisé dans une autre surface partielle (Z) de la surface d'image (BF).

5. Procédé suivant l'une des revendications 1 à 4, selon lequel des textes en écriture arabe peuvent être représentés dans le poste de transmission de texte, caractérisé par le fait que les caractères de l'écriture arabe sont représentés dans leur forme correcte, dans les textes représentés dans la première surface partielle (T1) et sont représentés dans leur forme de base dans la seconde surface partielle (T2) dans les textes pourvus des caractères de commande associés.

# FIG 1

# FIG 2

# FIG 3

# FIG 4